# EUROPEAN PATENT APPLICATION

(11) **EP 4 629 517 A1**
(43) Date of publication of application: **08.10.2025**
(21) Application number: 25165680.7
(22) Date of filing: 24.03.2025
(51) Int. Cl.: H04B 3/54

(54) **COMMUNICATION SYSTEM AND CONTROL SYSTEM**

(30) Priority: 29.03.2024 JP 2024055950
(71) Applicant: MegaChips Corporation, Osaka 532-0003 (JP)
(72) Inventor: SATO, Yohei, Osaka, 532-0003 (JP); TASHIBU, Masakazu, Osaka, 532-0003 (JP); ADACHI, Shingo, Osaka, 532-0003 (JP)
(74) Representative: Winter, Brandl - Partnerschaft mbB

(57) **Abstract**

A first wire connects a control device to a cable, and supplies a first power signal provided by the control device to the cable. First and second nodes are provided in the first wire. A second wire connects a driving device to the cable, and supplies a first power signal transmitted from the cable to the driving device. Third and fourth nodes are provided in the second wire. A power supplier is connected to the first node and supplies a second power signal. A power receiver is connected to the third node, and provides a second power signal supplied by the power supplier to a detection device. A first communication circuitry is connected to the fourth node. A second communication circuitry is connected to the second node, and transmits a communication signal to or receives a communication signal from the first communication circuitry.

## Description

### BACKGROUND

### Technical Field

The present disclosure relates to a communication system and a control system that supply signals.

### Description of Related Art

In a servo motor system used in a robot or an automated appliance, a servo motor and a servo amplifier are connected by a cable, and electric power is supplied from the servo amplifier to the servo motor through the cable. Further, various devices for detecting the operation state of the servo motor are provided in the servo motor, and the servo motor is connected to the servo amplifier by a plurality of wires. Therefore, the connection structure between the servo motor and the servo amplifier is likely to be large.

For example, JP 8-149899 A describes a control device in which a temperature detector and an encoder device are provided in a motor. The encoder device is connected to a control circuit by a pair of DC power supply lines and three pairs of output signal lines. DC power is supplied from the control circuit to the encoder device through the pair of DC power supply lines. A pulse signal indicating a rotational speed of the motor is output from the encoder device to the control circuit through the three pairs of output signal lines. Further, a signal detected by a temperature detector in accordance with a temperature of the motor is output as a DC signal to the control circuit through the above-mentioned pair of DC power supply lines.

### SUMMARY

In the control device described in JP 8-149899 A, it is not necessary to provide a dedicated signal line for outputting a signal detected by the temperature detector to the control circuit. Therefore, an increase in size of the connection structure is alleviated. However, in the servo motor system or the like, it is required to further reduce the size of the connection structure.

An object of the present disclosure is to provide a communication system and a control system that enable a reduction in size of a connection structure.

A communication system according to one aspect of the present disclosure that is provided between a driving device and a control device, the control device controlling an operation of the driving device through a cable based on an operation state of the driving device detected by a detection device, includes a first wire which connects the control device to the cable, is provided with a first node and a second node and supplies a first power signal provided by the control device to the cable, a second wire which connects the driving device to the cable, is provided with a third node and a fourth node and supplies the first power signal transmitted from the cable to the driving device, a power supplier that is connected to the first node of the first wire and supplies a second power signal, a power receiver that is connected to the third node of the second wire and provides the second power signal supplied by the power supplier to the detection device, a first communication circuitry configured to be connected to the fourth node of the second wire, and a second communication circuitry configured to be connected to the second node of the first wire, and transmit a communication signal indicating any information to the first communication circuitry or receive a communication signal indicating any information from the first communication circuitry.

A control system according to another aspect of the present disclosure includes a cable, a driving device, a detection device that detects an operation state of the driving device, a control device that controls an operation of the driving device through the cable based on an operation state of the driving device detected by the detection device, and the above-mentioned communication system that is provided between the driving device and the control device.

With the present disclosure, the size of the connection structure in the communication system can be reduced.

Other features, elements, characteristics, and advantages of the present disclosure will become more apparent from the following description of preferred embodiments of the present disclosure with reference to the attached drawings.

### BRIEF DESCRIPTION OF THE DRAWING

Fig. 1 is a diagram showing the configuration of a control system according to one embodiment of the present disclosure;
Fig. 2 is a diagram showing the configuration of a cable;
Fig. 3 is a diagram showing one example of the configuration of a power supplier;
Fig. 4 is a diagram showing another example of the configuration of the power supplier;
Fig. 5 is a diagram showing the configuration of a power receiver;
Fig. 6 is a diagram showing the configuration of a composite filter;
Fig. 7 is a diagram showing the configuration of a band-pass filter;
Fig. 8 is a diagram showing the frequency properties of various signals and various filters;
Fig. 9 is a diagram showing the transmission path of a drive signal;
Fig. 10 is a diagram showing the transmission path of a power supply signal; and
Fig. 11 is a diagram showing the transmission path of a communication signal.

### DETAILED DESCRIPTION

### 1. Configuration of Control System

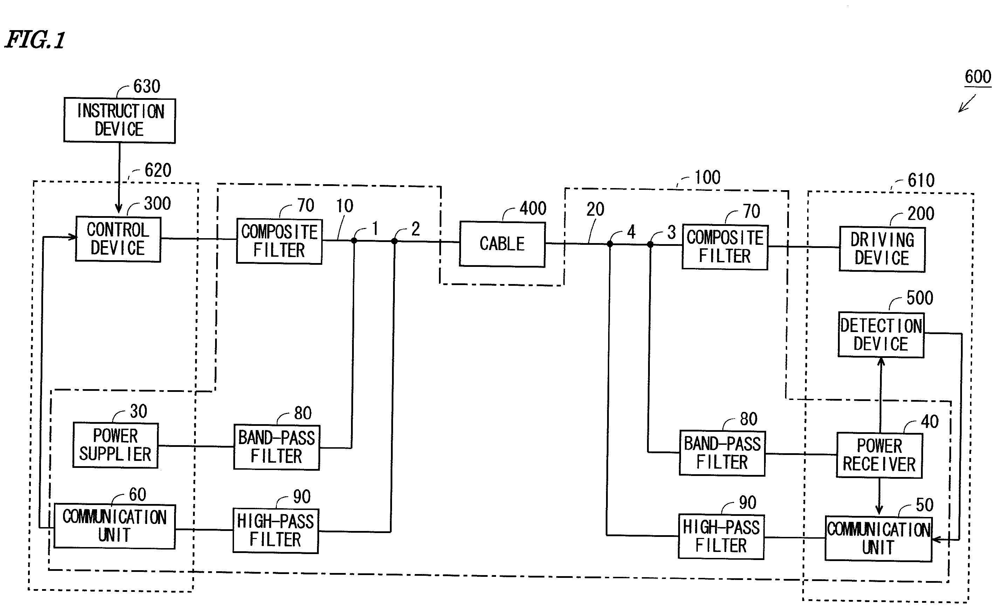

A communication system and a control system according to embodiments of the present disclosure will be described below in detail with reference to the drawings. Fig. 1 is a diagram showing the configuration of a control system according to one embodiment of the present disclosure. As shown in Fig. 1, the control system 600 includes a communication system 100, a driving device 200, a control device 300, a cable 400 and a detection device 500. The communication system 100 is provided between the driving device 200 and the control device 300.

In the present example, the control system 600 is a servo motor system including a servo motor 610, a servo amplifier 620 and an instruction device 630. The driving device 200 and the detection device 500 are provided as parts of the servo motor 610. The driving device 200 is a motor body. The detection device 500 includes an encoder, for example, and is attached to a rotation shaft of the driving device 200. The detection device 500 may be integrally provided as a detector of the driving device 200. The detection device 500 detects a rotation speed, a rotation angle or the like of the rotation shaft of the driving device 200 as an operation state of the driving device 200.

The control device 300 includes a CPU (Central Processing Unit) and a power supply device, for example, and is provided as part of the servo amplifier 620. The control device 300 controls an operation of the driving device 200 based on an instruction provided by the instruction device 630 or/and an operation state of the driving device 200. The instruction device 630 includes a CPU, for example. The instruction device 630 instructs the control device 300 to output a drive signal, described below, mainly at the start of an operation of the driving device 200.

The communication system 100 includes a wire 10, a wire 20, a power supplier 30, a power receiver 40, a communication unit 50, a communication unit 60, a pair of composite filters 70, a pair of band-pass filters 80 and a pair of high-pass filters 90. The power receiver 40 and the communication unit 50 may be provided as parts of the servo motor 610. Further, the power supplier 30 and the communication unit 60 may be provided as parts of the servo amplifier 620. The communication unit 50 and the communication unit 60 can communicate with each other.

The wire 10 connects the control device 300 to one end of the cable 400. In the wire 10, nodes 1, 2 are provided. While the nodes 1, 2 are provided in this order from the left to the right in the diagram in the example of Fig. 1, the order of arrangement for the nodes 1, 2 is not limited to this. Further, the electric power provided by the control device 300 is supplied to the cable 400 through the wire 10 as a drive signal. The drive signal is an example of a first power signal.

The wire 20 connects the driving device 200 to the other end of the cable 400. In the wire 20, nodes 3, 4 are provided. While the nodes 3, 4 are provided in this order from the right to the left in the diagram in the example of Fig. 1, the order of arrangement for the nodes 3, 4, is not limited to this. The drive signal transmitted from the cable 400 is supplied to the driving device 200 through the wire 20. The driving device 200 is driven when the drive signal is supplied. Therefore, when driving of the driving device 200 is to be stopped, the supply of the drive signal is stopped.

The power supplier 30 is connected to the node 1 of the wire 10 and supplies power a power supply signal. The power supply signal is an example of a second power signal. The power receiver 40 is connected to the node 3 of the wire 20. Thus, the power supply signal output by the power supplier 30 is supplied to the power receiver 40. The power receiver 40 receives the power supply signal and supplies power to the communication unit 50 and the detection device 500. As a result, the communication unit 50 and the detection device 500 work. The operation state of the driving device 200 is detected by the detection device 500 not only in a period during which the driving device 200 is driven but also in a period during which the driving device 200 is stopped. Therefore, the power supply signal needs to be supplied before the drive signal is supplied.

The communication unit 50 is connected to the node 4 of the wire 20. The communication unit 50 includes a PLC (Power Line Communication) modem, for example, and outputs a communication signal indicating an operation state of the driving device 200 detected by the detection device 500. The communication unit 60 is connected to the node 2 of the wire 10. The communication unit 60 includes a PLC modem, for example, and acquires the communication signal output by the communication unit 50 and supplies the communication signal to the control device 300. Although power is also provided to the communication unit 60 similarly to the communication unit 50, the form of providing power to the communication unit 60 is not limited in particular.

When the control device 300 instructs the detection device 500 to detect an operation state, the communication unit 60 may output a detection instruction signal for providing an instruction for detection. In this case, the communication unit 50 acquires the detection instruction signal output by the communication unit 60 and provides the detection instruction signal to the communication unit 50. Thus, the operation state of the driving device 200 is detected by the detection device 500.

One of the pair of composite filters 70 is provided in the wire 10, and the other one of the pair of composite filter 70 is provided in the wire 20. Here, the nodes 1, 2 of the wire 10 are located between the one composite filter 70 and the cable 400. Further, the nodes 3, 4 of the wire 20 are located between the other composite filter 70 and the cable 400. Each composite filter 70 includes of a band-stop filter and a low-pass filter.

One of the pair of band-pass filters 80 is provided between the node 1 of the wire 10 and the power supplier 30, and the other one of the pair of band-pass filters 80 is provided between the node 3 of the wire 20 and the power receiver 40. One of the pair of high-pass filters 90 is provided between the node 4 of the wire 20 and the communication unit 50, and the other one of the pair of high-pass filters 90 is provided between the node 2 of the wire 10 and the communication unit 60.

The composite filter 70 provided in the wire 20, the band-pass filter 80 provided between the node 3 and the power receiver 40, and the high-pass filter 90 provided between the node 4 and the communication unit 50, may be provided as parts of the servo motor 610. The composite filter 70 provided in the wire 10, the band-pass filter 80 provided between the node 1 and the power supplier 30, and the high-pass filter 90 provided between the node 2 and the communication unit 60, may be provided as parts of the servo amplifier 620.

### 2. Three-phase Cable

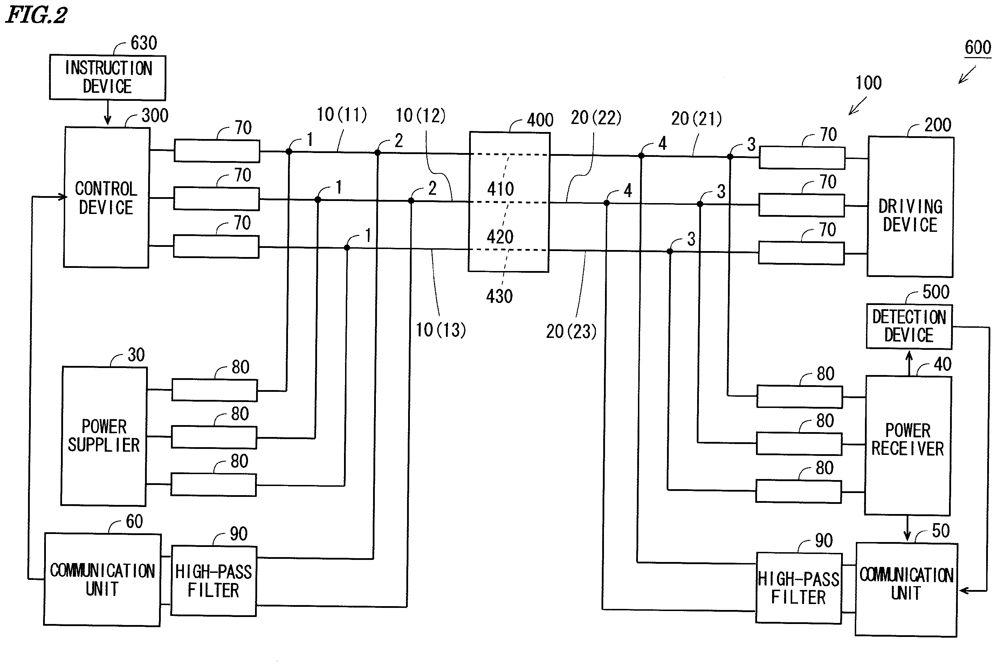

Fig. 2 is a diagram showing the configuration of the cable 400. As shown in Fig. 2, in the present embodiment, the cable 400 is a three-phase cable including wires 410, 420, 430. The communication system 100 includes three wires 10 and three wires 20. In a case in which being distinguished from one another, the three wires 10 are referred to as wires 11, 12, 13. Further, in a case in which being distinguished from one another, the three wires 20 are referred to as wires 21, 22, 23.

The control device 300 is connected to one end of each of the wires 410, 420, 430 by each of the wires 11, 12, 13. The driving device 200 is connected to the other end of each of the wires 410, 420, 430 by each of the wires 21, 22, 23. The nodes 1, 3 are respectively provided in the wire 10 and the wire 20, which are connected to one or more common wires among the wires 410, 420, 430. Similarly, the nodes 2, 4 are respectively provided in the wire 10 and the wire 20, which are connected to one or more common wires among the wires 410, 420, 430.

In the present example, the node 1 is provided in each of the wires 11 to 13. The node 3 is provided in each of the wires 21 to 23. The node 2 is provided in each of the wires 11, 12. The node 4 is provided in each of the wires 21, 22. The composite filter 70 is provided in each of the wires 11 to 13, and the composite filter 70 is provided in each of the wires 21 to 23. The band-pass filter 80 is provided between the power supplier 30 and each node 1, and the band-pass filter 80 is provided between the power receiver 40 and each node 3. The high-pass filter 90 is provided between the communication unit 50 and the two nodes 4, and the high-pass filter 90 is provided between the communication unit 60 and the two nodes 2.

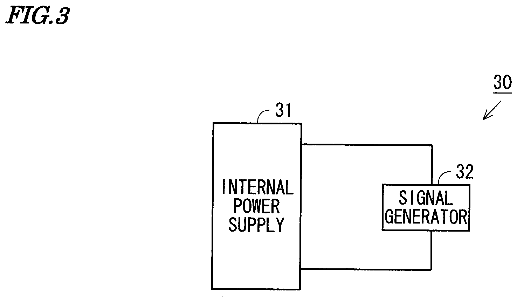

The power supplier 30 supplies, to the respective wires 11 to 13, respective power supply signals having phases that differ from one another by 120 degrees. Fig. 3 is a diagram showing one example of the configuration of the power supplier 30. As shown in Fig. 3, the power supplier 30 includes an internal power supply 31 and a signal generator 32, and is connected to an external power supply. The external power supply is a DC power supply, for example, and supplies DC power. The internal power supply 31 supplies power supplied by the external power supply and provides the power to the signal generator 32. The signal generator 32 receives the power supplied by the internal power supply 31 and generates a power supply signal.

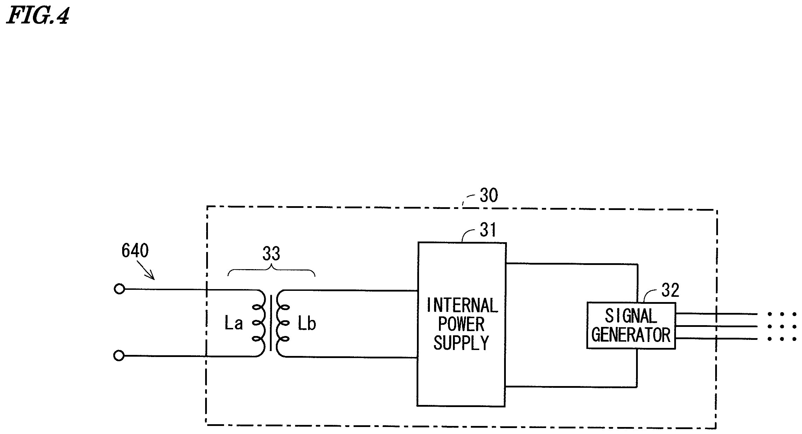

Fig. 4 is a diagram showing another example of the configuration of the power supplier 30. As shown in Fig. 4, the power supplier 30 may further include a transformer 33. The transformer 33 includes a primary coil La and a secondary coil Lb that are electrically insulated from each other and magnetically coupled to each other. The primary coil La is connected to the external power supply 640. The secondary coil Lb is connected to the internal power supply 31. Therefore, the external power supply 640 and the internal power supply 31 are electrically insulated from each other. The transformer 33 may be built in the internal power supply 31. The transformer 33 supplies DC power provided by the external power supply 640 to the internal power supply 31 while transforming the DC power. The internal power supply 31 converts the supplied DC power into the power having a predetermined magnitude and supplies the converted DC power to the signal generator 32.

The signal generator 32 is made of an electric circuit, for example. The signal generator 32 receives the DC power provided by the internal power supply 31 and generates three sinusoidal power supply signals having phases that differ from one other by 120 degrees. The three power supply signals generated by the signal generator 32 are respectively supplied to the wires 11 to 13 through the band-pass filters 80. In each of the wires 11 to 13, the supplied power supply signal is superimposed on a drive signal.

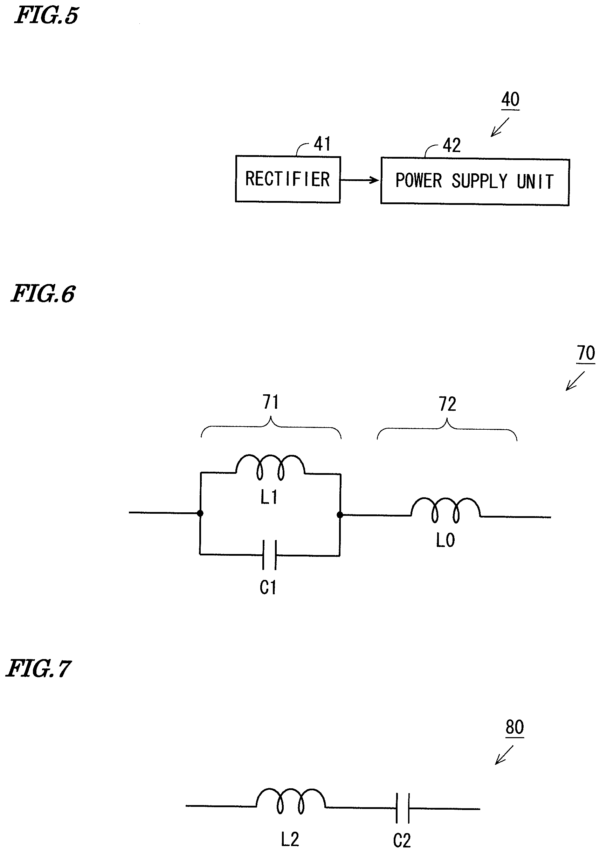

Fig. 5 is a diagram showing the configuration of the power receiver 40. As shown in Fig. 5, the power receiver 40 includes a rectifier 41 and a power supply unit 42. The rectifier 41 includes rectifying elements connected in a bridge shape, for example. The rectifier 41 acquires a power supply signal from each of the wires 11 to 13, and rectifies the acquired power supply signal to generate DC power. The power supply unit 42 converts the DC power generated by the rectifier 41 into DC power having a predetermined magnitude, and provides the converted DC power to the detection device 500 and the communication unit 50 of Fig. 2.

### 3. Frequency Properties

The frequency properties of various filters and various signals will be described below. Fig. 6 is a diagram showing the configuration of the composite filter 70. As shown in Fig. 6, in the composite filter 70, a band-stop filter 71 and a low-pass filter 72 are connected in series. The band-stop filter 71 has the configuration in which a coil L1 and a capacitor C1 are connected in parallel. The low-pass filter 72 is made of a coil L0. Fig. 7 is a diagram showing the configuration of the band-pass filter 80. As shown in Fig. 7, the band-pass filter 80 has the configuration in which a coil L2 and a capacitor C2 are connected in series.

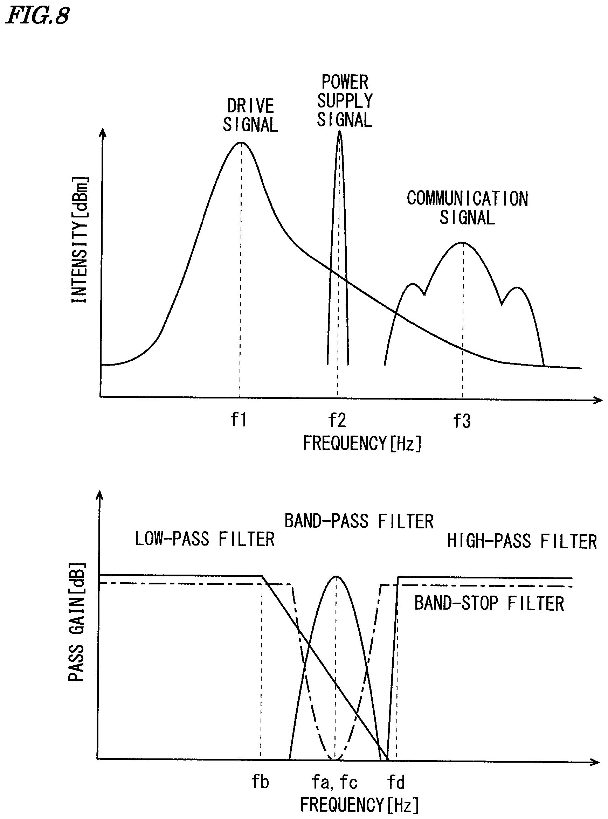

Fig. 8 is a diagram showing the frequency properties of various signals and various filters. In the upper part of Fig. 8, the graph showing the relationship between the frequency and the intensity of each signal is shown. In the lower part of Fig. 8, the graph showing the relationship between the frequency and the pass gain of each filter is shown. The frequency property of the band-stop filter 71 in the lower part of Fig. 8 is indicated by the one-dot and dash line for facilitation of visual recognition. As shown in the upper part of Fig. 8, a drive signal, a power supply signal and a communication signal respectively have peak frequencies f1, f2, f3. The peak frequencies f1 to f3 are different from one another. In the present example, the peak frequency f2 is higher than the peak frequency f1 and lower than the peak frequency f3.

As shown in the lower part of Fig. 8, the band-stop filter 71 of the composite filter 70 has a cutoff frequency fa. Therefore, the band-stop filter 71 removes a signal having a frequency in the vicinity of the cutoff frequency fa. The low-pass filter 72 of the composite filter 70 has a cut-off frequency fb. Therefore, the low-pass filter 72 passes a signal having a frequency equal to or lower than the cutoff frequency fb, and attenuates a signal having a frequency higher than the cutoff frequency fb.

The band-pass filter 80 has a cut-off frequency fc. Therefore, the band-pass filter 80 passes a signal having a frequency in the vicinity of the cutoff frequency fc. The high-pass filter 90 has a cut-off frequency fd. Therefore, the high-pass filter 90 passes a signal having a frequency equal to or higher than the cutoff frequency fd, and attenuates a signal having a frequency lower than the cutoff frequency fd.

Each of the cutoff frequencies fa, fc is set to the peak frequency f2. The cutoff frequency fb is set to a frequency between the peak frequency f1 and the peak frequency f3. In the present example, the cutoff frequency fb is set to a frequency between the peak frequency f1 and the peak frequency f2. The cutoff frequency fd is set to a frequency between the peak frequency f2 and the peak frequency f3. Further, in the present example, the peak frequency f1 is several tens of kHz, the peak frequency f2 is several MHz, and the peak frequency f3 is several tens of MHz.

While the values of the peak frequencies f1 to f3 are not limited to the above-mentioned examples, the peak frequency f2 may be not less than 300 kHz and not more than 30 MHz. In this case, the band-stop filter 71 having the cutoff frequency fa that coincides with the peak frequency f2 can be easily formed. Similarly, the band-pass filter 80 having the cutoff frequency fc that coincides with the peak frequency f2 can be easily formed. The cut-off frequency fa is a resonance frequency that is defined based on the inductance of the coil L1 and the electrostatic capacity of the capacitor C1 of Fig. 6. Further, the cut-off frequency fc is a resonance frequency that is defined based on the inductance of the coil L2 and the electrostatic capacity of the capacitor C2 of Fig. 7.

### 4. Operation of Control System

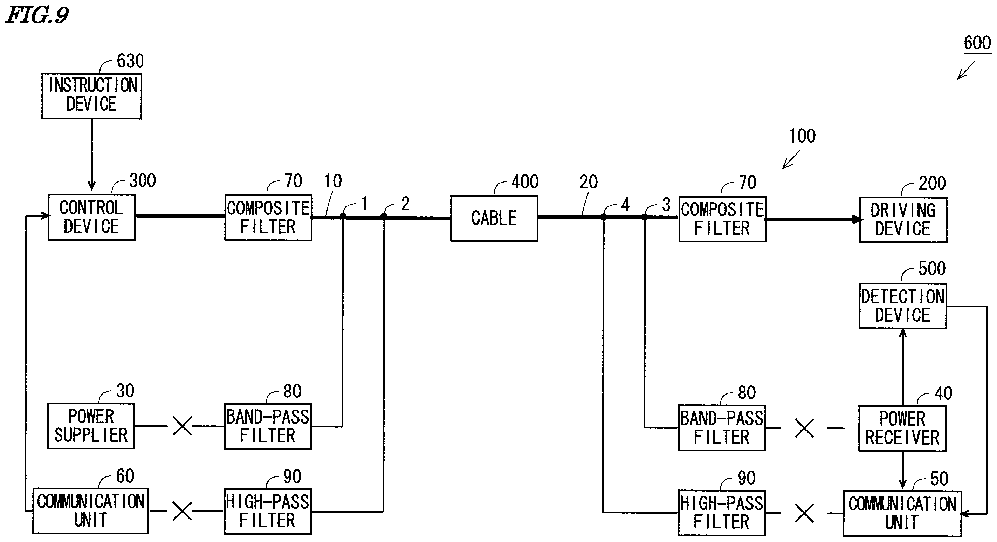

Fig. 9 is a diagram showing the transmission path of a drive signal. As shown in Fig. 9, the control device 300 outputs a drive signal based on an operation state of the driving device 200 indicated by an instruction signal provided by the instruction device 630 and/or a communication signal provided by the communication unit 60. The peak frequency f1 of the drive signal does not coincide with the cutoff frequency fa of the band-stop filter 71 of each composite filter 70, and is lower than the cutoff frequency fb of the low-pass filter 72. Therefore, the drive signal output by the control device 300 is provided to the driving device 200 through the pair of composite filters 70. Thus, the driving device 200 is driven.

On the other hand, the peak frequency f1 of the drive signal does not coincide with the cutoff frequency fc of each band-pass filter 80. Therefore, the drive signal output by the control device 300 hardly passes through each band-pass filter 80, and is not supplied to the power supplier 30 or the power receiver 40 as indicated by the symbols X in Fig. 9. Further, the peak frequency f1 of the drive signal is lower than the cutoff frequency fd of each high-pass filter 90. Therefore, the drive signal output by the control device 300 hardly passes through each high-pass filter 90, and is not supplied to either one of the communication units 50, 60 as indicated by the symbols X in Fig. 9.

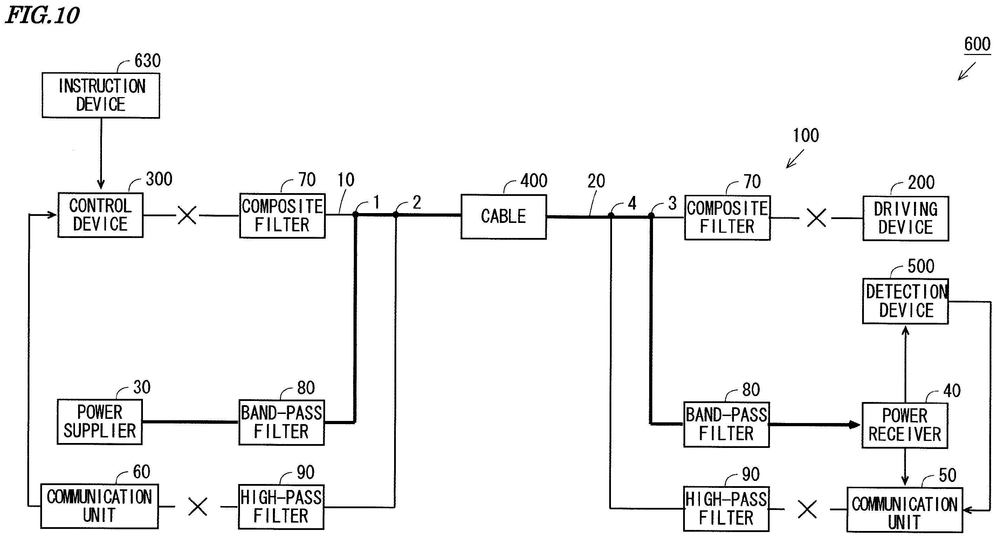

Fig. 10 is a diagram showing the transmission path of a power supply signal. As shown in Fig. 10, the power supplier 30 outputs a power supply signal. The peak frequency f2 of the power supply signal coincides with the cutoff frequency fc of each band-pass filter 80. Therefore, the power supply signal output by the power supplier 30 is provided to the power receiver 40 through the pair of band-pass filters 80. Thus, the detection device 500 and the communication unit 50 work. As a result, an operation state of the driving device 200 is detected by the detection device 500. Further, based on a detection result, a communication signal is output by the communication unit 50.

On the other hand, the peak frequency f2 of the power supply signal coincides with the cutoff frequency fa of the band-stop filter 71 of each composite filter 70. Therefore, the power supply signal output by the power supplier 30 hardly passes through the band-stop filter 71 of each composite filter 70, and is not supplied to the driving device 200 or the control device 300 as indicated by the symbols X in Fig. 10. Further, the peak frequency f2 of the power supply signal is lower than the cutoff frequency fd of each high-pass filter 90. Therefore, the power supply signal output by the power supplier 30 hardly passes through each high-pass filter 90, and is not supplied to either one of the communication units 50, 60 as indicated by the symbols X in Fig. 10.

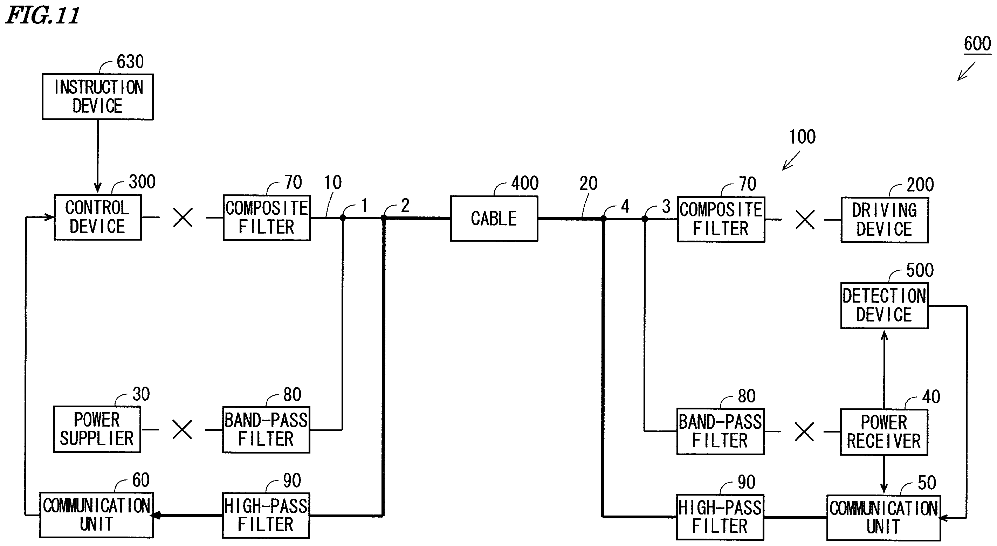

Fig. 11 is a diagram showing the transmission path of a communication signal. As shown in Fig. 11, based on the detection result in regard to an operation state of the driving device 200 by the detection device 500, the communication unit 50 outputs a communication signal. The peak frequency f3 of the communication signal is higher than the cutoff frequency fd of each high-pass filter 90. Therefore, the communication signal output by the communication unit 50 passes through the pair of high-pass filters 90, and is provided to the communication unit 60. Thus, the communication signal is provided from the communication unit 60 to the control device 300.

On the other hand, the peak frequency f3 of the communication signal is higher than the cutoff frequency fb of the low-pass filter 72 of each composite filter 70. Therefore, the communication signal output by the communication unit 50 hardly passes through the low-pass filter 72 of each composite filter 70, and is not supplied to the driving device 200 or the control device 300 as indicated by the symbols X in Fig. 11. Further, the peak frequency f3 of the communication signal does not coincide with the cutoff frequency fc of each band-pass filter 80. Therefore, the communication signal output by the communication unit 50 hardly passes through each band-pass filter 80, and is not supplied to the power supplier 30 or the power receiver 40 as indicated by the symbols X in Fig. 11.

### 5. Effects

In the communication system 100 according to the present embodiment, the control device 300 and the cable 400 are connected to each other by the wire 10, and a drive signal output by the control device 300 is supplied to the cable 400 through the wire 10. The driving device 200 and the cable 400 are connected to each other by the wire 20, and a drive signal transmitted from the cable 400 is supplied to the driving device 200 through the wire 20. Thus, the driving device 200 is driven.

In the wire 10, the nodes 1, 2 are provided. In the wire 20, the nodes 3, 4 are provided. A power supply signal is supplied by the power supplier 30 connected to the node 1 of the wire 10. The power supplier 30 supplies the power supply signal to the power receiver 40 connected to the node 3 of the wire 20. Thus, the detection device 500 and the communication unit 50 work. Therefore, an operation state of the driving device 200 is detected by the detection device 500.

A communication signal indicating an operation state of the driving device 200 detected by the detection device 500 is output by the communication unit 50 connected to the node 4 of the wire 20. The communication signal output by the communication unit 50 is acquired by the communication unit 60 connected to the node 2 of the wire 10. The communication signal acquired by the communication unit 60 is provided to the control device 300. Thus, based on the operation state of the driving device 200, the operation of the driving device 200 is controlled by the control device 300.

With this configuration, in the control system 600 in which the driving device 200, the detection device 500, the power receiver 40 and the communication unit 50 are arranged to be spaced apart from the control device 300, the power supplier 30 and the communication unit 60, it is not necessary to provide a dedicated wire for connecting the power receiver 40 to the power supplier 30. Further, it is not necessary to provide a dedicated wire for connecting the communication unit 50 to the communication unit 60. Therefore, the size of the connection structure in the communication system 100 can be reduced.

Each of a drive signal, a power supply signal and a communication signal has the peak frequencies f1 to f3. The peak frequencies f1 to f3 are different from one another. In this case, the drive signal, the power supply signal and the communication signal can be easily separated from one another. In particular, in the present example, the peak frequency f2 is higher than the peak frequency f1 and lower than the peak frequency f3. In this case, the drive signal, the power supply signal and the communication signal can be more easily separated from one another. Further, by setting the peak frequency f2 to a frequency between the peak frequency f1 and the peak frequency f3, it is possible to form each of the composite filter 70, the band-pass filter 80 and the high-pass filter 90 using an inexpensive and compact coil, an inexpensive and compact capacitor or the like.

Specifically, the composite filter 70 including the band-stop filter 71 and the low-pass filter 72 is provided in each of the wires 10, 20. In this case, the drive signal, the power supply signal and the communication signal can be easily separated from one another with the simple configuration. The cutoff frequency fa of the band-stop filter 71 is the peak frequency f2, and the cutoff frequency fb of the low-pass filter 72 is between the peak frequency f1 and the peak frequency f3. In this case, it is possible to prevent the power supply signal and the communication signal from being supplied to the driving device 200 and the control device 300 while enabling the supply of the drive signal from the control device 300 to the driving device 200.

Further, the band-pass filters 80 are respectively provided between the node 1 of the wire 10 and the power supplier 30, and between the node 3 of the wire 20 and the power receiver 40. In this case, the power supply signal, the drive signal and the communication signal can be easily separated from one another with the simple configuration. The cutoff frequency fc of the band-pass filter 80 is the peak frequency f2. In this case, it is possible to prevent the drive signal and the communication signal from being supplied to the power supplier 30 and the power receiver 40 while enabling the supply of the power supply signal from the power supplier 30 to the power receiver 40.

Further, the high-pass filters 90 are respectively provided between the node 4 of the wire 20 and the communication unit 50, and between the node 2 of the wire 10 and the communication unit 60. In this case, the communication signal, the drive signal and the power supply signal can be easily separated from one another with the simple configuration. The cutoff frequency fd of the high-pass filter 90 is between the peak frequency f2 and the peak frequency f3. In this case, it is possible to prevent the drive signal and the power supply signal from being supplied to the communication unit 50 and the communication unit 60 while enabling the supply of the communication signal from the communication unit 50 to the communication unit 60.

The cable 400 is the three-phase cable including the three wires 410, 420, 430. The nodes 1, 3 are respectively provided in the wire 10 and the wire 20, which are connected to one or more common wires among the wires 410, 420, 430. The nodes 2, 4 are respectively provided in the wire 10 and the wire 20, which are connected to one or more common wires among the wires 410, 420, 430.

In this case, it is possible to supply not only the drive signal but also the power supply signal and the communication signal by using the three-phase cable. In the present example, the nodes 1, 3 are provided in each of the three wires 10 (wires 11 to 13). The power supplier 30 supplies respective power supply signals having phases that differ from one another by 120 degrees to the respective wires 11 to 13. With this configuration, because the power supply signal is supplied through the wires 11 to 13, even in a case in which the amplitude of the power supply signal supplied to each of the wires 11 to 13 is small, it is possible to supply high power.

In the power supplier 30, the internal power supply 31 and the external power supply 640 are electrically insulated from each other. The power supplied by the external power supply 640 is provided to the signal generator 32 by the internal power supply 31. The power supply signal is generated by the supply of power to the signal generator 32. With this configuration, even in a case in which elements forming the signal generator 32 vary, etc., it is possible to eliminate a common mode current of each wire caused by phase variations of the power supply signal. Thus, it is possible to reduce a common mode noise that enters the power supply signal.

In the power receiver 40, DC power is generated because the power supply signal is rectified by the rectifier 41, and is provided to the power supply unit 42. The DC power generated by the rectifier 41 is converted into DC power having a predetermined magnitude by the power supply unit 42, and is provided to the detection device 500 and the communication unit 50. Thus, the detection device 500 works, and an operation state of the driving device 200 is detected.

### 6. Other Embodiments

(1) While the node 1 is provided in each of the wires 11 to 13 and the node 3 is provided in each of the wires 21 to 23 in the above-mentioned embodiment, the embodiment is not limited to this. The nodes 1, 2 may be respectively provided in the wire 10 and the wire 20, which are connected to two common wires among the wires 410, 420, 430 of the three-phase cable. Further, the power supplier 30 may supply respective power supply signals having phases that differ from one another by 180 degrees to two respective common wires. With this configuration, because the power supply signals are supplied through the two wires among the wires 11 to 13, even in a case in which the amplitude of the power supply signal supplied to each wire is small, it is possible to supply relatively high power.
   Further, in a case in which the power consumption of the power receiver 40 is small, it is not necessary to supply high power to the power receiver 40. Therefore, the nodes 1, 3 may be respectively provided in the wire 10 and the wire 20 connected to one common wire among the wires 410, 420, 430 of the three-phase cable, and a power supply signal may be supplied from the power supplier 30 to the power receiver 40 through the wires 10, 20.
(2) While the composite filter 70 includes the band-stop filter 71 in the above-mentioned embodiment, the embodiment is not limited to this. In a case in which a power supply signal hardly passes through the low-pass filter 72, the composite filter 70 does not have to include the band-stop filter 71. That is, the low-pass filter 72 may be provided instead of the composite filter 70.
   Further, in the above-mentioned embodiment, a band-pass filter having a cutoff frequency in the vicinity of the peak frequency of a communication signal may be provided instead of the high-pass filter 90. Also in this case, it is possible to prevent a drive signal and a power supply signal from being supplied to the communication unit 50 and the communication unit 60 while enabling the supply of a communication signal from the communication unit 50 to the communication unit 60.
(3) While the cable 400 is a three-phase cable in the above-mentioned embodiment, the embodiment is not limited to this. The cable 400 may be a two-phase cable or a single-phase cable.
(4) While the control system 600 is a servo motor system in the above-mentioned embodiment, the embodiment is not limited to this. The control system 600 may be another system including the driving device 200 and the control device 300. For example, the control system 600 may be an Ethernet communication system. Alternatively, the control system 600 may be a system that does not include the driving device 200 or the control device 300.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

### 7. Correspondences Between Constituent Elements in Claims and Parts in Preferred Embodiments

In the following paragraphs, non-limiting examples of correspondences between various elements recited in the claims below and those described above with respect to various preferred embodiments of the present disclosure are explained. As each of various elements recited in the claims, various other elements having configurations or functions described in the claims can be also used.

In the above-mentioned embodiment, the driving device 200 is an example of a driving device, the detection device 500 is an example of a detection device, the cable 400 is an example of a cable, the control device 300 is an example of a control device, the communication system 100 is an example of a communication system, and the nodes 1 to 4 are respectively examples of first to fourth nodes. The wires 10 to 13 are examples of a first wire, the wires 20 to 23 are examples of a second wire, the power supplier 30 is an example of a power supplier, the power receiver 40 is an example of a power receiver, and the communication units 50, 60 are respectively examples of first and second communication circuitries.

The peak frequencies f1 to f3 are respectively examples of first to third peak frequencies, the band-stop filter 71 is an example of a band-stop filter, and the low-pass filter 72 is an example of a low-pass filter. The composite filter 70 is an example of a composite filter, the cutoff frequencies fa to fd are respectively examples of first to fourth cutoff frequencies, and the band-pass filter 80 is an example of a band-pass filter. The high-pass filter 90 is an example of a high-pass filter, the wires 410, 420, 430 are examples of a wire, the signal generator 32 is an example of a signal generator, the internal power supply 31 is an example of an internal power supply, the rectifier 41 is an example of a rectifier, the power supply unit 42 is an example of a power supply circuitry, and the control system 600 is an example of a control system.

### 8. Overview of Embodiments

(Item 1) A communication system according to item 1 that is provided between a driving device and a control device, the control device controlling an operation of the driving device through a cable based on an operation state of the driving device detected by a detection device, includes a first wire which connects the control device to the cable, is provided with a first node and a second node and supplies a first power signal provided by the control device to the cable, a second wire which connects the driving device to the cable, is provided with a third node and a fourth node and supplies the first power signal transmitted from the cable to the driving device, a power supplier that is connected to the first node of the first wire and supplies a second power signal, a power receiver that is connected to the third node of the second wire and provides the second power signal supplied by the power supplier to the detection device, a first communication circuitry configured to be connected to the fourth node of the second wire, and a second communication circuitry configured to be connected to the second node of the first wire, and transmit a communication signal indicating any information to the first communication circuitry or receive a communication signal indicating any information from the first communication circuitry.

With this communication system, in the control system in which the driving device, the detection device, the power receiver and the first communication circuitry are arranged to be spaced apart from the control device, the power supplier and the second communication circuitry, it is not necessary to provide a dedicated wire for connecting the power receiver to the power supplier. Further, it is not necessary to provide a dedicated wire for connecting the first communication circuitry to the second communication circuitry. Therefore, the size of the connection structure in the communication system can be reduced.

(Item 2) The communication system according to item 1, wherein the first power signal may have a first peak frequency, the second power signal may have a second peak frequency, the communication signal may have a third peak frequency, and the first peak frequency, the second peak frequency and the third peak frequency may be different from one another.

In this case, the first power signal, the second power signal and the communication signal can be easily separated from one another.

(Item 3) The communication system according to item 2, wherein the second peak frequency may be higher than the first peak frequency and may be lower than the third peak frequency.

In this case, the first power signal, the second power signal and the communication signal can be more easily separated from one another.

(Item 4) The communication system according to item 3, may further include a composite filter that is provided in each of the first wire and the second wire and includes a band-stop filter and a low-pass filter.

In this case, the first power signal, the second power signal and the communication signal can be separated from one another with the simple configuration.

(Item 5) The communication system according to item 4, wherein a first cutoff frequency of the band-stop filter of the composite filter may be the second peak frequency.

In this case, it is possible to prevent the second power signal from being supplied to the driving device and the control device while enabling the supply of the first power signal from the control device to the driving device.

(Item 6) The communication system according to item 4 or 5, wherein a second cutoff frequency of the low-pass filter of the composite filter may be between the first peak frequency and the third peak frequency.

In this case, it is possible to prevent the communication signal from being supplied to the driving device and the control device while enabling the supply of the first power signal from the control device to the driving device.

(Item 7) The communication system according to any one of items 3 to 6, may further include a band-pass filter that is provided between the first node of the first wire and the power supplier, and a band-pass filter that is provided between the third node of the second wire and the power receiver.

In this case, the second power signal, the first power signal and the communication signal can be separated from one another with the simple configuration.

(Item 8) The communication system according to item 7, wherein a third cutoff frequency of the band-pass filter may be the second peak frequency.

In this case, it is possible to prevent the first power signal and the communication signal from being supplied to the power supplier and the power receiver while enabling the supply of the second power signal from the power supplier to the power receiver.

(Item 9) The communication system according to any one of items 3 to 8, may further include a high-pass filter or a second band-pass filter that is provided between the fourth node of the second wire and the first communication circuitry, and a high-pass filter or a second band-pass filter that is provided between the second node of the first wire and the second communication circuitry.

In this case, the communication signal, the first power signal and the second power signal can be separated from one another with the simple configuration.

(Item 10) The communication system according to item 9, wherein a fourth cutoff frequency of the high-pass filter may be between the second peak frequency and the third peak frequency, or a fifth cutoff frequency of the second band-pass filter may be within a predetermined range of the third peak frequency.

In this case, it is possible to prevent the first power signal and the second power signal from being supplied to the first communication circuitry and the second communication circuitry while enabling the supply of the communication signal from the first communication circuitry to the second communication circuitry.

(Item 11) The communication system according to any one of items 1 to 10, wherein the cable may be a three-phase cable including three wires, the control device may be connected to the three respective wires of the three-phase cable by the three respective first wires, the driving device may be connected to the three respective wires of the three-phase cable by the three respective second wires, the first node and the third node may be respectively provided in the first wire and the second wire connected to one or more common wires out of the three wires of the three-phase cable, and the second node and the fourth node may be respectively provided in the first wire and the second wire connected to one or more common wires out of the three wires of the three-phase cable.

In this case, by using the three-phase cable, it is possible to supply not only the first power signal but also the second power signal and the communication signal.

(Item 12) The communication system according to item 11, wherein the first node may be provided in each of the three first wires, the third node may be provided in each of the three second wires, and the power supplier may supply the respective second power signals having phases that differ from one another by 120 degrees to the three respective first wires.

With this configuration, because the second power signal is supplied through the three wires of the three-phase cable, even in a case in which the amplitude of the second power signal to each wire is small, it is possible to supply high power.

(Item 13) The communication system according to item 11, wherein the first node may be provided in each of the two first wires respectively connected to two wires out of the three wires of the three-phase cable, the third node may be provided in each of the two second wires respectively connected to the two wires out of the three wires of the three-phase cable, and the power supplier may supply the respective second power signals having phases that differ from each other by 180 degrees to the respective two first wires.

With this configuration, because the second power signal is supplied through the two wires out of the three wires of the three-phase cable, even in a case in which the amplitude of the second power signal to each wire is small, it is possible to supply relatively high power.

(Item 14) The communication system according to item 12 or 13, wherein the power supplier may include a signal generator that receives power and generates the second power signal, and an internal power supply that provides power supplied by an external power supply to the signal generator while being electrically insulated from the external power supply.

With this configuration, even in a case in which elements forming the signal generator vary, etc., it is possible to eliminate a common mode current of each wire caused by phase variations of the second power signal. Thus, it is possible to reduce a common mode noise that enters the second power supply signal.

(Item 15) The communication system according to any one of items 1 to 14, wherein the power receiver may include a rectifier that rectifies the second power signal and generates DC power, and a power supply circuitry configured to provide the DC power generated by the rectifier to the detection device and the first communication circuitry.

In this case, it is possible to cause the detection device and the first communication circuitry to work by using the second power signal.

(Item 16) A control system according to item 16 includes a cable, a driving device, a detection device that detects an operation state of the driving device, a control device that controls an operation of the driving device through the cable based on an operation state of the driving device detected by the detection device, and the communication system according to any one of items 1 to 15 that is provided between the driving device and the control device.

With this control system, because the above-mentioned communication system is provided between the driving device and the control device, it is possible to reduce the size of the connection structure in the control system.

While preferred embodiments of the present disclosure have been described above, it is to be understood that variations and modifications will be apparent to those skilled in the art without departing the scope and spirit of the present disclosure. The scope of the present disclosure, therefore, is to be determined solely by the following claims.

## Claims

1. A communication system that is provided between a driving device and a control device, the control device controlling an operation of the driving device through a cable based on an operation state of the driving device detected by a detection device, comprising:
a first wire which connects the control device to the cable, is provided with a first node and a second node and supplies a first power signal provided by the control device to the cable;
a second wire which connects the driving device to the cable, is provided with a third node and a fourth node and supplies the first power signal transmitted from the cable to the driving device;
a power supplier that is connected to the first node of the first wire and supplies a second power signal;
a power receiver that is connected to the third node of the second wire and provides the second power signal supplied by the power supplier to the detection device;
a first communication circuitry configured to be connected to the fourth node of the second wire; and
a second communication circuitry configured to be connected to the second node of the first wire, and transmit a communication signal indicating any information to the first communication circuitry or receive a communication signal indicating any information from the first communication circuitry.

2. The communication system according to claim 1, wherein
the first power signal has a first peak frequency,
the second power signal has a second peak frequency,
the communication signal has a third peak frequency, and
the first peak frequency, the second peak frequency and the third peak frequency are different from one another.

3. The communication system according to claim 2, wherein
the second peak frequency is higher than the first peak frequency and is lower than the third peak frequency.

4. The communication system according to claim 3, further comprising a composite filter that is provided in each of the first wire and the second wire and includes a band-stop filter and a low-pass filter.

5. The communication system according to claim 4, wherein
a first cutoff frequency of the band-stop filter of the composite filter is the second peak frequency.

6. The communication system according to claim 4 or 5, wherein
a second cutoff frequency of the low-pass filter of the composite filter is between the first peak frequency and the third peak frequency.

7. The communication system according to any one of claims 3 to 6, further comprising a band-pass filter that is provided between the first node of the first wire and the power supplier, and a band-pass filter that is provided between the third node of the second wire and the power receiver.

8. The communication system according to claim 7, wherein
a third cutoff frequency of the band-pass filter is the second peak frequency.

9. The communication system according to any one of claims 3 to 8, further comprising a high-pass filter or a second band-pass filter that is provided between the fourth node of the second wire and the first communication circuitry, and a high-pass filter or a second band-pass filter that is provided between the second node of the first wire and the second communication circuitry.

10. The communication system according to claim 9, wherein
a fourth cutoff frequency of the high-pass filter is between the second peak frequency and the third peak frequency, or a fifth cutoff frequency of the second band-pass filter is within a predetermined range of the third peak frequency.

11. The communication system according to any one of claims 1 to 10, wherein
the cable is a three-phase cable including three wires,
the control device is connected to the three respective wires of the three-phase cable by the three respective first wires,
the driving device is connected to the three respective wires of the three-phase cable by the three respective second wires,
the first node and the third node are respectively provided in the first wire and the second wire connected to one or more common wires out of the three wires of the three-phase cable, and
the second node and the fourth node are respectively provided in the first wire and the second wire connected to one or more common wires out of the three wires of the three-phase cable.

12. The communication system according to claim 11, wherein
the first node is provided in each of the three first wires,
the third node is provided in each of the three second wires, and
the power supplier supplies the respective second power signals having phases that differ from one another by 120 degrees to the three respective first wires.

13. The communication system according to claim 11, wherein
the first node is provided in each of the two first wires respectively connected to two wires out of the three wires of the three-phase cable,
the third node is provided in each of the two second wires respectively connected to the two wires out of the three wires of the three-phase cable, and
the power supplier supplies the respective second power signals having phases that differ from each other by 180 degrees to the respective two first wires.

14. The communication system according to claim 12 or 13, wherein
the power supplier includes
a signal generator that receives power and generates the second power signal, and
an internal power supply that provides power supplied by an external power supply to the signal generator while being electrically insulated from the external power supply.

15. A control system comprising:
a cable;
a driving device;
a detection device that detects an operation state of the driving device;
a control device that controls an operation of the driving device through the cable based on an operation state of the driving device detected by the detection device; and
the communication system according to any one of claims 1 to 15 that is provided between the driving device and the control device.
